(19) Europäisches Patentamt
European Patent Office
Office européen des brevets

(11) Publication number: **0 161 762**
**A2**

# (12) EUROPEAN PATENT APPLICATION

(21) Application number: **85302099.8**

(22) Date of filing: **26.03.85**

(51) Int. Cl.⁴: **C 08 F 226/04**, C 08 F 2/32

(30) Priority: **26.03.84 US 592768**

(43) Date of publication of application: **21.11.85**
**Bulletin 85/47**

(84) Designated Contracting States: **DE FR GB**

(71) Applicant: **ATLANTIC RICHFIELD COMPANY, 515 South Flower Street, Los Angeles California 90071 (US)**

(72) Inventor: **Dixon, Kenneth W., 34 Colonial Circle, Thorton Pennsylvania (US)**

(74) Representative: **Cropp, John Anthony David et al, MATHYS & SQUIRE 10 Fleet Street, London, EC4Y 1AY (GB)**

(54) **Water swellable polymers having high water absorbency.**

(57) Novel water-insoluble, water-swellable diallyl quaternary ammonium salt polymers are prepared by polymerizing the corresponding monomer(s) in the presence of a polyfunctional vinyl compound as a crosslinking agent.

EP 0 161 762 A2

# WATER SWELLABLE POLYMERS HAVING HIGH WATER ABSORBENCY

This invention relates to water absorbent resins and more particularly to water-insoluble, water-swellable polymers prepared from allylic quaternary ammonium salts.

## PRIOR ART

Water absorbent resins are widely used in the manufacture of products which require high water absorption capability. For example, water absorbent resins are used in the manufacture of surgical and dental sponges, catamenial tampons, diapers, meat trays, household pet litter, mats, etc. These resins are also used for the modification of soil to improve water retention and increase air capacity and for a host of other applications.

Various natural and synthetic fibers have been used for the manufacture of water absorption materials. Natural or modified natural fibers, such as cellulose and carboxymethyl cellulose have been used in the manufacture of aqueous liquid-absorbing products, but these materials can only absorb relatively small amounts of water, i.e., at most 30 times the weight of the polymer. Other water absorbent resin materials, such as starch-acrylonitrile graft copolymer can absorb large amounts of deionized

water, such as up to 300 to 500 times their own weight, but the water absorption capacity of these resins drops considerably, i.e. to about 30 to 40 times the weight of the resin when they are used for the absorption of saline solutions. Thus, the utility of such resins is diminished considerably when they are used for the absorption of such salt-containing fluids as urine and catamenial fluids.

A number of polymers have been developed which have improved stability and deionized water and saline liquid absorption capacity. Thus, U.S. patent 3,669,103 discloses the preparation of water-absorbing polymers of partially crosslinked polyacrylamide and poly (alkali metal acrylate) which are prepared by radical polymerization in an aqueous liquid of the corresponding monomer and a divinyl or diallyl cross-linking compound. U.S. patent 3,670,731 discloses water-absorbent articles made from crosslinked acrylamide polymers. U.S. patent 4,340,706 teaches that polymers of acrylic acid and an alkali acrylate polymerized in an inverse suspension using specific surfactants can absorb at least 80 times their own weight of saline solution. Other U.S. patents which disclose water absorbent polymers prepared from acrylic acid, acrylamide, or alkali metal acrylate are 4,093,776, 4,286,082 and 4,342,858.

The use of non-crosslinked polymers of diallyldimethylammonium chloride as drainage and retention aids has also been described in the literature. For example, Chemical Abstract 98:70459d describes poly(diallyldimethylammonium chloride) as a pigment

dispersant and retention aid, Chemical Abstract 97:180371f states that poly(diallydimethylammonium chloride) may be used as a flocculant in the clarification of water and Chemical Abstract 97:143241t states that diallyldimethylammonium chloride-acrylamide copolymer may be used as a drainage and retention aid in the manufacture of paper products intended for food contact. Other Chemical Abstracts which disclose the use of polymers and copolymers of diallyldimethylammonium chloride and/or diallyldiethylammonium chloride and acrylamide include 97:196977u, 75:108624u and 87:182734u.

OBJECTS OF THE INVENTION

New water-insoluble, water-swellable polymeric compounds have now been discovered which have high deionized water and aqueous saline solution absorptive capacity. Accordingly it is an object of the invention to present new water-insoluble, water-swellable polymeric materials. It is another object of the invention to present new water-insoluble, water-swellable polymeric materials which have very high water absorptivity. It is another object of the invention to present water-insoluble, water-swellable polymers whose water absorptive properties are not significantly diminished when used to absorb saline solutions. It is another object of the invention to present a process for preparing new water-insoluble, water-swellable polymers. It is another objective of the invention to present a process for preparing new, partially crosslinked water-swellable polymers. It is another object of the invention to present a process for preparing new water-insoluble,

water-swellable polymers having excellent water absorbtion capability. These and other objects of the invention are supported in the following description and examples of embodiments of the invention.

SUMMARY OF THE INVENTION

The new polymeric compounds of the invention are partially crosslinked copolymers of at least one diallylic quaternary ammonium salt. Preferred polymers are those prepared from diallydialkylammonium halides. The diallyl quaternary ammonium salts of the invention polymerize like monofunctional vinyl compounds, i.e. they polymerize alone or with other monofunctional vinyl compounds to form substantially linear polymers. In the present invention the diallyl quaternary ammonium salts comprise the sole monofunctional polymerizable reactants.

Crosslinking of the polymer is accomplished by polymerizing the monomer charge in the presence of a sufficient amount of one or more polyfunctional vinyl compounds to react with the diallylic quaternary ammonium salt to form a water-insoluble, water-swellable polymeric compound. The term "polyfunctional vinyl compound", as used herein means addition polymerizable compounds which react alone or with monofunctional vinyl compounds to form three dimensional polvmeric compounds. The term polyfunctional vinyl compound does not include diallyl quaternary ammonium salts since they polymerize to form substantially linear polymers. The preferred polyfunctional vinyl compounds are the triallylalkylammonium halides, the tetraallylammonium halides and divinylbenzene.

The polymers of the invention are prepared by inverse suspension polymerization with an oil phase as the continuous phase and an aqueous phase as the discontinuous phase. The aqueous phase of the reaction mixture is comprised of water, the monomer, the cross-linking agent and catalyst. The continuous phase is comprised of the inert organic diluent or mixture of diluents. The two phase system may be formed in any desired order. According to one embodiment of the invention the aqueous phase of the reaction mixture is formed by combining and stirring the components sufficiently to form a uniform solution. The aqueous phase is then combined with the organic phase and the reaction suspension is established and maintained by means of agitation. The reaction vessel is purged with an inert gas, such as nitrogen, to scavenge oxygen from the reaction zone. The reactants are then heated to and maintained at the desired polymerization temperature. The reaction temperature is not critical and is determined by the particular reaction system employed and the desired molecular weight of the polymer product. In general, reaction temperatures in the range of about 0 to 150°C are usually used. Most often, a reaction temperature of about 50 to 100°C is preferred. During the reaction the reaction mixture is agitated sufficiently to maintain a stable suspension and to remove excess heat. When the desired degree of conversion is attained the reaction is terminated by cooling the reaction mixture and recovering the product from the polymerization medium. One method

of product recovery consists of removing the water from the reaction mixture, as by distillation, and separating the polymeric product from the inert diluent by filtration, decantation, centrifugation, etc. The polymer may be washed in an inert organic liquid to remove impurities such as suspending agents. The foregoing sequence of steps is exemplary only and is not intended to be limiting. Equivalent techniques for carrying out the reaction and recovering the product may be employed. Furthermore, if desired, the organic phase may be recovered and reused.

The polymeric product is obtained in the form of fine solid beads. The product can be used as is, pulverized, molded or otherwise formed into various products, depending upon the intended end use of the product. Typical product forms include film, powder, fiber, fabric, particulates, etc. The product can be combined with other materials, such as cotton, wood pulp, etc.

## DETAILED DESCRIPTION OF THE INVENTION

The diallylic quaternary ammonium compounds useable in the invention are any diallylic ammonium compounds which form environmentally acceptable water-swellable polymers. Suitable diallylic ammonium compounds are those having the structural formula

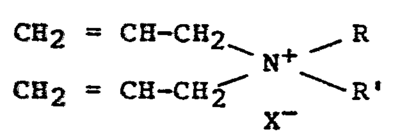

wherein R and R' are organic radicals which are free of substituents which would unduly interfere with the

formation of environmentally acceptable water-swellable polymers and X is an environmentally acceptable anion. Thus R and R' may be hydrocarbon radicals, such as saturated aliphatic and cycloaliphatic hydrocarbon radicals, aromatic hydrocarbon radicals and substituted hydrocarbon radicals, such as carboxylates, ethers, alcohols, esters, etc. R and R' may be the same or different radicals. R and R' may also be joined together to form a nitrogen-containing ring compound. As indicated above, the only restrictions on R and R' is that they do not, to an unacceptable degree, adversely interfere with the ability of the monomer to form the desired polymeric product, that they do not prevent the polymeric product from performing in the intended manner and that they do not result in the formation of environmentally unacceptable products. Thus, subject to these restrictions, R and R' may have any number of carbon atoms or be any substituents. In a preferred embodiment of the invention R and R' are saturated aliphatic or cycloaliphatic hydrocarbons having 1 to 20 and more preferably 1 to 6 carbon atoms.

The radical X in the above formula may represent an anion which likewise must not, to an unacceptable extent, interfere with the ability of the monomer to form the desired product, interfere with the desired performance of the desired product or result in the formation of environmentally unacceptable products. X may be an inorganic anion, such as halide, nitrate, nitrite, phosphate, etc. ion, or an organic anion, such as acetate, propionate, etc. radical. In the preferred

embodiment X is a halide ion. Preferred halide ions are the chloride and bromide ions.

Typical of compounds falling within the scope of the above description are aliphatic and aromatic diallyldihydrocarbylammonium salts, such as diallyldimethylammonium chloride, diallyldimethylammonium bromide, diallyldiethylammonium chloride, diallylethylmethylammonium chloride, diallyldidecylammonium bromide, diallydibenzylammonium chloride, diallylbenzylmethylammonium bromide, diallyldimethylammonium nitrate, diallyldiethylammonium acetate, etc; and diallyldiorganoammonium salts containing hetero atoms, such as N,N-diallyl-N,N-diethoxymethylammonium chloride, N,N-diallyl-N,N-dicarboxypropylammonium chloride, etc. Preferred diallylammonium salts are the diallyldihydrocarbylammonium halides, particularly the diallyldialkyl ammonium salts of chlorine and bromine, such as diallyldimethylammonium chloride, diallyldimethylammonium bromide, diallyldiethylammonium chloride, diallylethylmethylammonium chloride, etc.

The crosslinking component may be any polyfunctional ethylenically unsaturated compound which is free of functional groups which would interfere with the ability of the diallylic quaternary ammonium salt to form water-swellable polymeric products. It is desirable to use crosslinking agents which form environmentally acceptable products. Typical of such crosslinking agents are tri-and tetra-allylammonium halides, such as triallylmethylammonium chloride, triallylethylammonium bromide, tetraallylammonium chloride, tetraallylammonium bromide,

etc; polyfunctional acrylamides, such as methylene bisacrylamide, etc.; polyfunctional acrylic type compounds, such as ethylene glycol diacrylate, ethylene glycol dimethacrylate, trimethylolpropane trimethacrylate, allyl acrylate, etc; and other polyallyl and polyvinyl compounds, such as diallyl phthalate, diallylmaleate, divinylbenzene, etc.

The amount of polyfunctional vinyl compound used is that amount which will effect the desired degree of crosslinking of the polymeric product, i.e. an amount which will result in the production of the desired water-insoluble, water-swellable polymeric compound. Thus, any amount of polyfunctional vinyl compound varying from the least amount which is effective to produce products having useful water absorbing properties up to about 20 mole percent may be present in the reaction mixture. Usually, however, the amount of polyfunctional vinyl compound used in the preparation of the products of the invention varies from about 0.005 to about 20 mole percent and preferably about 0.05 to 10 mole percent, based on the total amount of diallylic quaternary ammonium salt and polyfunctional vinyl compound present in the reaction mixture.

The polymerization is carried out in the presence of a free radical generating catalyst. Conventional free radical catalysts, such as organic peroxides, inorganic persulfates and azo compounds, produce satisfactory results in the preparation of the polymeric product. Representative organic peroxides

include benzoyl peroxide, t-butyl hydroperoxide, t-butyl peroctoate, cumene hydroperoxide, t-butyl peroxide, etc. Representative persulfates include potassium persulfate, ammonium persulfate, etc. Representative azo compounds include azobisisobutronitrile, etc. Redox radical generators may also be used to catalyze the polymerization. For example, persulfates can be combined with reducing substances such as sulfites or amines to form free radical generating initiators. Examples of redox systems include ammonium persulfate with sodium bisulfite, t-butylhydroperoxide with ferrous ammonium sulfate, etc. The particular catalyst used will, of course, depend upon the polymerization temperature employed and the particular monomer and organic diluents used in the polymerization process. The amount of catalyst used in the reaction of the invention is generally in the range of about 0.001 to 5 percent and preferably in the range of about 0.01 to 1 percent, based on the total weight of monomer present in the reaction zone.

As noted above, water or a liquid in which the monomer charge is soluble constitutes the discontinuous phase and an inert organic diluent, i.e. a liquid in which the monomer and polymer product are insoluble and which will not adversely interfere with the desired polymerization reaction, constitutes the continuous phase. Typical of the inert organic liquids that can be used as the continuous phase are saturated aliphatic or cylcloaliphatic hydrocarbons such as pentane, hexane,

heptane, ligroin, cylclopentane, cylclohexane, methylcyclopentane, etc.; aromatic hydrocarbons such as benzene, toluene, etc.; ketones, such as acetone, methylethylketone, etc. Preferred organic diluents are the saturated aliphatic and cycloaliphatic hydrocarbons such as hexane, heptane and cyclohexane. Mixtures of two or more of the above organic liquids can be used, if desired.

The ratio of continuous phase to discontinuous phase is not critical. The amount of continuous phase in the reaction vessel is desirably great enough to permit the heat developed as a result of the polymerization reaction to be easily dissipated and to maintain the monomer and polymer in the suspended state. The ratio of continuous phase to aqueous phase maintained during the reaction is often about 9:1 to 2:3 and usually about 3:1 to 1:1, on a volume basis.

The concentration of total monomer to aqueous phase is not critical. The optimum concentration will depend upon the entire system. In general the monomer constitutes about 30 to 75% and more often 40 to 65% by weight of the total aqueous phase. It is sometimes found advantageous, however, to use a system in which the discontinuous phase is made up substantially of the monomer.

It is usually preferred to use a suspending agent to maintain the reactants in a stable suspension. Any of the well known suspending agents used for inverse suspension polymerizations can be used in the invention.

Examples of suitable suspending agents include the polymeric suspending agents, such as starch, gelatin, cellulose derivatives, polyvinyl alcohol, etc. A particularly preferred suspending agent is vinyl pyrrolidone-alpha olefin copolymer.

Other additives, such as stabilizers, fillers, molecular weight regulators, etc., may be used in the polymerization. Examples of stabilizers and fillers include talc, hydrophobic silica, calcium carbonate, tricalcium phosphate, hydroxy apatite, Fuller's earth, bentonite, etc. The stablizers are generally used at concentrations of about .01 to 10% and usually about 0.1 to about 5%, based on the total weight of the reaction mixture.

The following example illustrates a specific embodiment of the invention. Unless otherwise indicated parts and percentages are on a weight basis. In the example the swelling index is obtained as follows: A weighed sample of test polymer is immersed and allowed to remain in an aqueous liquid for one hour. The swollen sample is removed with a screen and permitted to drain in air until all excess water is removed. The sample is then reweighed. The swelling index is obtained from the following equation:

$$\text{swelling index} = \frac{\text{wet sample weight}}{\text{dry sample weight}}$$

EXAMPLE

To 134.6 g of a 68.3% aqueous solution of diallyldimethylammonium chloride were added 2.39 g of a

57.7% solution of triallylmethylammonium chloride, 0.269 g tetra-sodium ethylenediaminetetracetate and 0.1287 g of ammonium persulfate. The solution was stirred until it was clear. The solution was added to 260 ml of heptane containing 0.1 g of a vinyl pyrrolidone - alpha olefin copolymer (sold by GAF Corporation under the trademark Ganex V220) and 3.0 g of hydrophobic silica. The mixture was agitated in a high speed mixer for 5 minutes, then added to a glass reactor equipped with an agitator and heating mantle. The system was purged with nitrogen for one hour, then heated to and maintained at 70°C for 3 hours with continuous stirring. The suspension was heated to reflux to remove the water and then cooled. On cooling the product was collected by filtration. The product had a swelling index of 158 in deionized water and 31 in 0.9% saline solution.

The above example illustrates the benefit of the invention. The swelling index of 158 in deionized water shows that the polymer has superior water absorption properties.

Although the invention has been described with particular reference to a specific example, it is understood that the invention includes variations of the example. For example, the polymer may be made from a mixture of diallyldimethylammonium halide salts. The invention is limited only by the scope of the appended claims.

CLAIMS

1. A water-insoluble water-swellable polymeric compound of

(a) a first component, present in an amount of at least about 80 mole percent, comprised of at least one diallylic ammonium salt having the structural formula

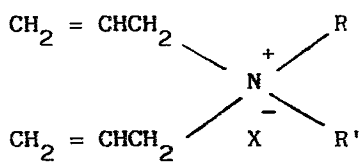

wherein R and R' are the same or different organic radicals or together form a divalent organic radial and X is an anion, and

(b) a second component, present in an amount effective to produce said water-insoluble, water-swellable polymeric compound but not in excess of about 20 mole percent, comprised of at least one polyfunctional vinyl compound, said molar percentages being based on the total amount of said first and second components in said polymeric compound.

2. A polymeric compound as claimed in claim 1 wherein the mole percentages of said first and second components are about 80 to 99.995% and 0.005 to 20% respectively, based on the total amount of said first and second components in said polymeric compound.

3. A polymeric compound as claimed in claim 2 wherein the molar percentages of said first component and said second component are 99.95 to 90 and .05 to 10% respectively, based on the total amount of said first and second components in said polymeric compound.

4. A polymeric compound as claimed in any one of claims 1, 2 and 3 wherein R and R' are selected from saturated hydrocarbon radicals, carboxyl-containing radicals, ethers, esters, hydroxyl-containing radicals and mixtures of these and X is selected from halides, nitrate, nitrite, phosphate, carboxylate radicals and mixtures of these.

5. A polymeric compound as claimed in claim 4 wherein R and R' are alkyl groups having 1 to 6 carbon atoms and X is a halide.

6. A polymeric compound as claimed in claim 5 wherein R and R' are alkyl groups having 1 to 4 carbon atoms.

7. A polymeric compound as claimed in any one of claims 1 to 6 wherein said polyfunctional compound is selected from triallylalkylammonium halides, tetraallylammonium halides, polyfunctional acrylamides, polyfunctional acrylic compounds and divinylbenzene.

8. A water-dispersible, water-swellable polymeric compound of

(a) about 80 to 99.95 mole percent of a first component comprised of at least one diallyldialkylammonium halide, and

(b) about 0.05% to 10 mole percent of a second component selected from triallylalkylammonium halide, divinylbenzene and mixtures of these.

10. A process for preparing a water-insoluble water-swellable polymer comprising suspending a reaction mixture comprised of an aqueous solution of at least one diallyl quaternary ammonium salt and, as a crosslinking agent, a polyfunctional vinyl compound in an inert organic liquid and polymerizing the reaction mixture in the presence of a free radial catalyst.

11. A process as claimed in claim 10 wherein the diallyl quaternary ammonium salt is a diallyldialkylammonium halide whose alkyl groups each have 1 to 6 carbon atoms and said polyfunctional vinyl compound is selected from triallylalkylammonium halides having 1 to 6 alkyl carbon atoms, tetrallylammonium halides, divinylbenzene and mixtures of these.

12. A process as claimed in claim 11 wherein the diallyl quaternary ammonium salt is a diallyldialkylammonium halide wherein each alkyl group has 1 to 4 carbon atoms and the halide is selected from chlorine and bromine.

13. A process as claimed in claim 11 or claim 12 wherein the polyfunctional vinyl compound is selected from triallylmethylammonium chloride, tetraallylammonium chloride, divinylbenzene and mixtures of these.

14. A process as claimed in any one of claims 10 to 13 wherein the inert organic diluent is one or a mixture of more than one

saturated aliphatic or cycloaliphatic hydrocarbon liquid.

15. A process as claimed in any one of claims 10 to 14 wherein the polymerization is carried out in the presence of a polymeric suspending agent.

16. A process as claimed in claim 15 wherein the suspending agent is a vinyl pyrrolidone-alpha-olefin copolymer.

17. A process as claimed in any one of claims 10 to 16 wherein the free radical catalyst is a water-soluble catalyst.

18. A process for preparing a water-insoluble water-swellable polymer comprising

(1) preparing a water-in-oil suspension comprising as the continuous phase an inert organic liquid and as the discontinuous phase an aqueous solution containing at least one diallyl quaternary ammonium salt, a polyfunctional vinyl compound and a free radical catalyst,

(b) Maintaining the water-in-oil suspension at a temperature sufficiently high and for a sufficient period of time to form the desired polymeric product, and

(c) recovering the polymeric product from the reaction mixture.

19. A process as claimed in claim 18 wherein the molar ratio of diallylic quaternary ammonium salt to polyfunctional vinyl compound is about 99.995:005 to about 80:10.

20. A process as claimed in claim 18 or claim 19 wherein the polymerization reaction is substantially carried out at a temperature in the range of about 50 to 100°C and the catalyst concentration is about 0.001 to 5 percent, based on the total weight of monomer in the reaction zone.